# EUROPÄISCHE PATENTSCHRIFT

(11) **EP 2 414 653 B1**
(45) Veröffentlichungstag und Bekanntmachung des Hinweises auf die Patenterteilung: **01.03.2017**
(21) Anmeldenummer: 10709482.3
(22) Anmeldetag: 12.03.2010
(51) Int. Cl.: F02C 9/26, F23C 6/04, F23N 1/02, F02C 6/00, F23R 7/00

(54) **GASTURBINE MIT VERBESSERTEM TEILLAST-EMISSIONSVERHALTEN**
GAS TURBINE WITH IMPROVED PARTIAL LOAD EMMISION BEHAVIOUR
TURBINE À GAZ AVEC LE COMPORTEMENT D'ÉMISSION AMÉLIORÉE À CHARGE PARTIELLE

(30) Priorität: 01.04.2009 CH 536092009
(43) Veröffentlichungstag der Anmeldung: 08.02.2012
(73) Patentinhaber: General Electric Technology GmbH, 5400 Baden (CH)
(72) Erfinder: EROGLU, Adnan, CH-5417 Untersiggenthal (CH); KNAPP, Klaus, CH-5412 Gebenstorf (CH); FLOHR, Peter, CH-5300 Turgi (CH); KNÖPFEL, Hans Peter, CH-5605 Dottikon (CH); GENG, Weiqun, CH-5405 Dättwil (CH)
(74) Vertreter: Bernotti, Andrea
(86) Internationale Anmeldenummer: PCT/EP2010/053171
(87) Internationale Veröffentlichungsnummer: WO 2010/112318

(56) Entgegenhaltungen:
- EP-A- 0 646 704
- EP-A- 0 646 705
- EP-A- 0 718 470
- EP-A- 0 921 292
- EP-A1- 0 974 789
- EP-A1- 1 531 305
- EP-A2- 1 319 895

## Beschreibung

### Technisches Gebiet

Die Erfindung betrifft Verfahren zum Betrieb einer Gasturbine mit sequentieller Verbrennung und niedrigen CO- Emissionen.

### Stand der Technik

Gasturbinen mit sequentieller Verbrennung sind seit geraumer Zeit erfolgreich kommerziell im Betrieb. Bei Ihnen wird verdichtete Luft in einer ersten Brennkammer mit Brennstoff verbrannt und eine erste, als Hochdruckturbine bezeichnete, Turbine mit den Heisgasen beaufschlagt. Die Temperatur der aus der Hochdruckturbine ausgetretenen Heissgase wird in einer zweiten Brennkammer durch erneute Zugabe von Brennstoff und dessen Verbrennung wieder erhöht und eine zweite, als Niederdruckturbine bezeichnete, Turbine mit diesen Heisgasen beaufschlagt.

Gegenüber herkömmlichen Gasturbinen mit nur einer Brennkammer zeichnen sie sich durch den zusätzlichen Freiheitsgrad einer getrennten Brennstoffregelung für die erste und zweite Brennkammer aus. Diese bietet ausserdem die Möglichkeit zunächst nur die erste Brennkammer in Betrieb zu nehmen und erst bei höherer Last die zweite Brennkammer zuzuschalten. Dies ermöglicht ein flexibles Betriebskonzept mit gutem Emissionsverhalten über einen weiten Betriebsbereich der Gasturbine.

In den vergangen Jahren waren die Hauptaugenmerke der Entwicklung die Reduktion der NOx Emissionen und ein hoher Teillastwirkungsgrad. Gasturbinen mit sequentieller Verbrennung, die nach bekannten Verfahren betrieben werden, wie sie beispielsweise in der EP0718470 beschrieben sind, haben sehr niedrige NOx Emissionen und können einen exzellenten Teillastwirkungsgrad realisieren.

Die oben erwähnten bekannten Betriebskonzepte können allerdings bei tiefer Teillast, insbesondere im Bereich von etwa 20% bis 50% relativer Last zu hohen CO- Emissionen (Kohlenmonoxyd- Emissionen) führen.

Diese hohen CO- Emissionen werden bei tiefer Teillast typischerweise durch die zweite Brennkammer einer Gasturbine mit sequentieller Verbrennung verursacht. Herkömmlich wird die zweite Brennkammer bei tiefer Teillast gezündet, wenn die verstellbaren Verdichterleitreihen geschlossen sind und die Heissgas- oder Turbineneintrittstemperatur der Hochdruckturbine einen oberen Grenzwert erreicht hat. Zur Zündung wird die zweite Brennkammer mit einem minimalen Brennstoffstrom versorgt, der typischerweise durch die Regelcharakteristik des Brennstoffregelventils vorgegeben wird. Aufgrund der hohen Austrittstemperatur der ersten Turbine kommt es zur Selbstzündung des in die zweite Brennkammer eingebrachten Brennstoffstroms. Der Brennstoffstrom wird zur Lastregelung über die Last angehoben. Solange der Brennstoffstrom klein ist, wird die Temperatur der Heissgase in der zweiten Brennkammer nicht wesentlich angehoben. Die Reaktionsgeschwindigkeit bleibt entsprechend relativ klein und es können unverbrannte Kohlenwasserstoffe und CO aufgrund der kurzen Verweilzeit in der Brennkammer auftreten. Diese treten insbesondere bei magerer Verbrennung, das heisst bei einer Verbrennung mit hoher Luftzahl λ auf. Die Luftzahl λ ist das Verhältnis aus tatsächlich für eine Verbrennung zur Verfügung stehender Luftmasse zur mindestens notwendigen stöchiometrischen Luftmasse. Sie wird auch als Luftverhältnis, Luftverhältniszahl oder Luftüberschuss bezeichnet.

Im Rahmen eines flexiblen Kraftwerksbetriebes wird jedoch zunehmend auch die Möglichkeit gefordert, längere Betriebsperioden bei tiefer Teillast zu fahren. Ein längerer Betrieb bei tiefer Teillast kann nur realisiert werden, wenn auch die CO-Emissionen auf einem tiefen Level bleiben. Herkömmlich wird zur Reduktion der CO- Emissionen ein CO Katalysator verwendet. Neben hohen Anschaffungskosten führen diese zu Druckverlusten im Abgassystem der Gasturbine und damit verbunden Leistungs- und Wirkungsgradeinbussen.

### Darstellung der Erfindung

Der vorliegenden Erfindung ist die Aufgabe gestellt, ein Verfahren zum Betrieb einer Gasturbine mit sequentieller Verbrennung sowie eine Gasturbine mit sequentieller Verbrennung vorzuschlagen, die einen Betrieb mit reduzierten CO-Emissionen ermöglicht.

Erfindungsgemäß wird diese Aufgabe durch den Gegenstand der unabhängigen Ansprüche gelöst. Vorteilhafte Ausführungsformen sind Gegenstand der abhängigen Ansprüche

Der Kern der Erfindung ist ein Verfahren zum Betrieb der Gasturbine, welches die Luftzahl λ der sich in Betrieb befindlichen Brenner der zweiten Brennkammer im Teillastbetrieb unter einer maximalen Luftzahl λₘₐₓ hält. Dieses Verfahren zeichnet sich im wesentlichen durch drei neue Elemente sowie ergänzenden Massnahmen aus, die einzeln oder in Kombination durchgeführt werden können.

Die maximale Luftzahl λₘₐₓ hängt dabei von den einzuhaltenden CO-Emissionsgrenzen, dem Design des Brenners und der Brennkammer sowie den Betriebsbedingungen, das heisst insbesondere der Brennereintrittstemperatur, ab.

Das erste Element ist eine Änderung in der Fahrweise der verstellbaren Verdichterleitreihe, welche es erlaubt, die zweite Brennkammer erst bei höherer Teillast in Betrieb zu nehmen. Ausgehend von Leerlaufbetrieb wird die verstellbare Verdichterleitreihe bereits geöffnet, während nur die erste Brennkammer in Betrieb ist. Dies erlaubt ein Auflasten zu einer höheren relativen Last, bevor die zweite Brennkammer in Betrieb gesetzt werden muss. Wenn die verstellbare Verdichterleitreihe geöffnet ist und die Heissgas- oder Turbineneintrittstemperatur der Hochdruckturbine ein Limit erreicht hat, wird die zweite Brennkammer mit Brennstoff versorgt. Weiter wird die verstellbare Verdichterleitreihe schnell geschlossen. Das Schliessen der verstellbaren Verdichterleitreihe bei konstanter Turbineneintrittstemperatur TIT der Hochdruckturbine würde ohne Gegenmassnahmen zu einer deutlichen Reduktion der relativen Leistung führen. Um diese Leistungsreduktion zu vermeiden, kann der Brennstoffmassenstrom, der in die zweite Brennkammer eingeleitet wird, erhöht werden. Die minimale Last, bei der die zweite Brennkammer in Betrieb genommen wird, und der minimale Brennstoffstrom in die zweite Brennkammer werden damit deutlich angehoben. Damit wird auch die minimale Heissgastemperatur der zweiten Brennkammer angehoben, die Luftzahl λ reduziert und somit die CO- Emissionen reduziert.

Um ein gleichmässiges Auflasten, das heisst eine Erhöhung der Leistung der Gasturbine mit praktisch konstantem Gradienten zu ermöglichen, wird das Schliessen der Verdichterleitreihe bei konstanter Turbineneintrittstemperatur TIT der Hochdruckturbine durchgeführt, sobald die verstellbare Verdichterleitreihe geöffnet ist und die Heissgas- oder Turbineneintrittstemperatur der Hochdruckturbine das Limit erreicht hat. Weiter wird das Schliessen der verstellbaren Verdichterleitreihe mit der Brennstoffversorgung der zweiten Brennkammer synchronisiert, d.h. beide Vorgänge gleichzeitig oder mit einer leichten Zeitverzögerung zueinander durchgeführt.

Als verstellbare Verdichterleitreihe ist mindestens eine Leitschaufelreihe bezeichnet, die zur Regelung des Ansaugmassenstroms des Verdichters in Ihrem Anstellwinkel verstellbar ist. Bei modernen Verdichtern ist typischerweise mindestens die Verdichtervorleitreihe verstellbar. In der Regel sind zwei oder mehr Leitreihen verstellbar.

Das Limit der Turbineneintrittstemperatur TIT der Hochdruckturbine wird auch als Teillastlimit bezeichnet. Es ist in der Regel kleiner oder gleich dem Volllastlimit, wobei das Volllastlimit die maximale Turbineneintrittstemperatur bei Vollast ist.

Bei dem Ablasten wird das Verfahren umgekehrt, das heisst, die Last wird bei geschlossener verstellbarer Verdichterleitreihe durch Reduktion des in die zweite Brennkammer zugeführten Brennstoffmassenstroms gesenkt bis ein geeigneter Grenzwert der relativen Last, der TIT der Niederdruckturbine, der TAT der Niederdruckturbine, des Brennstoffmassenstroms der zweiten Brennkammer oder eines anderen geeigneten Parameters oder einer Kombination von Parametern erreicht ist. Sobald dieser Grenzwert erreicht ist, wird die Brennstoffzufuhr in die zweite Brennkammer gestoppt und die verstellbare Verdichterleitreihe schnell geöffnet.

Um ein wiederholtes Zu- und Abschalten der zweiten Brennkammer mit dem damit verbunden Öffnen und Schliessen der verstellbaren Verdichterleitreihe zu vermeiden, kann der Grenzwert, der das Ausschalten der zweiten Brennkammer auslöst, mit einer Hysterese versehen werden. Dass heisst, die relative Last, bei der die zweite Brennkammer abgeschaltet wird, ist tiefer als die, bei der sie zugeschaltet wird.

Idealerweise wird die TIT der ersten Turbine bei dem schnellen Schliessen oder Öffnen der verstellbaren Verdichterleitreihe durch den Regler konstant gehalten. Praktisch kann es jedoch durch das schnelle Schliessen der verstellbaren Verdichterleitreihe und durch das Ein- oder Ausschalten der zweiten Brennkammer zu einem Überschwingen der TIT der Hochdruckturbine kommen. Um dies zu vermeiden, ist in einer Ausführung eine Vorsteuerung des Brennstoffregelventils der ersten Brennkammer vorgeschlagen. Bei dem schnellen Schliessen der verstellbaren Verdichterleitreihe wird das Brennstoffregelventil der ersten Brennkammer durch die Vorsteuerung entsprechend etwas geschlossen. Analog wird bei dem schnellen Öffnen der verstellbaren Verdichterleitreihe das Brennstoffregelventil durch die Vorsteuerung entsprechend etwas geöffnet.

Das zweite Element zur Reduktion der Luftzahl λ ist eine Änderung in der Fahrweise durch Anheben der Turbinenaustrittstemperatur der Hochdruckturbine TAT1 und/ oder der Turbinenaustrittstemperatur der Niederdruckturbine TAT2 im Teillastbetrieb. Diese Anhebung erlaubt es das Öffnen der verstellbaren Verdichterleitreihe zu einem höheren Lastpunkt zu verschieben.

Herkömmlich ist die maximale Turbinenaustrittstemperatur der zweiten Turbine für den Vollastfall bestimmt und die Gasturbine und eventuell nachgeschaltete Abhitzekessel entsprechend dieser Temperatur ausgelegt. Dies führt dazu, dass bei Teillastbetrieb mit geschlossener verstellbarer Verdichterleitreihe die maximale Heissgastemperatur der zweiten Turbine nicht durch die TIT2 (Turbineneintrittstemperatur der zweiten Turbine) begrenzt ist, sondern durch die TAT2 (Turbinenaustrittstemperatur der zweiten Turbine). Da bei Teillast mit geschlossener, mindestens einer verstellbaren Verdichterleitreihe der Massenstrom und damit das Druckverhältnis über die Turbine reduziert wird, wird auch das Verhältnis von Turbineneintritts- zu Turbinenaustrittstemperatur reduziert. Entsprechend wird bei konstanter TAT2 auch die TIT2 reduziert und liegt meist deutlich unter dem Volllastwert. Eine vorgeschlagene leichte Erhöhung der TAT2 über das Volllastlimit hinaus, typischerweise in der Grössenordnung von 10°C bis 30°C, führt zwar zu einem Anstieg der TIT2, diese bleibt aber unter dem Vollastwert und kann praktisch ohne oder ohne wesentliche Lebensdauereinbussen realisiert werden. Anpassungen in der Auslegung oder in der Materialwahl werden nicht nötig oder können typischerweise auf die Abgasseite beschränkt werden. Zur Erhöhung der TIT2 wird die Heissgastemperatur erhöht, was durch eine Erhöhung des Brennstoffmassenstroms und einer damit verbundenen Reduktion der Luftzahl λ realisiert wird. Entsprechend werden die CO- Emissionen reduziert.

Eine weitere Möglichkeit, die Luftzahl λ der sich in Betrieb befindlichen Brenner zu reduzieren, ist das Ausschalten von einzelnen Brennern und Umverteilen des Brennstoffes bei konstanter TIT2.

Um die TIT2 im Mittel konstant zu halten, müssen die in Betrieb befindlichen Brenner entsprechend der Anzahl der abgeschalteten Brenner heisser betrieben werden. Dazu wird die Brennstoffzufuhr angehoben und damit die lokale Luftzahl λ reduziert.

Als Turbineneintrittstemperatur wird beispielsweise eine theoretische Mischungstemperatur der Heissgase und aller Kühlluftmassenströme nach ISO 2314 / 1989 benutzt. Es kann aber beispielsweise auch mit der Heissgastemperatur vor Eintritt in die Turbine, oder der sogenannten "Feuerungstemperatur", einer Mischtemperatur nach der ersten Turbinenleitschaufel, benutzt werden

Ausgehend von hoher Last, bei der alle Brenner der zweiten Brennkammer in Betrieb sind, sind verschiedene Fahrweisen möglich bei denen beispielsweise umgekehrt proportional zur Last Brenner ausgeschaltet werden.

Für einen auf CO- Emissionen optimierten Betrieb wird bei einer Gasturbine mit Trennebene typischerweise zunächst an die Trennebene angrenzender Brenner ausgeschaltet. Als Trennebene wird dabei die Ebene bezeichnet, in der ein Gehäuse typischerweise in obere und untere Hälfte geteilt ist. Die jeweiligen Gehäusehälften sind in der Trennebene beispielsweise mit einem Flansch verbunden.

In Folge werden danndessen Nachbarbrenner ausgeschaltet oder ein auf der gegenüber liegenden Seite der Brennkammer an die Trennebene angrenzender Brenner ausgeschaltet und in Folge immer abwechselnd die Nachbarbrenner alternierend auf beiden Seiten der Brennkammer ausgehend von der Trennebene.

Es wird bevorzugt zunächst ein an die Trennebene angrenzender Brenner ausgeschaltet, da die Trennebene einer Gasturbine typischerweise nicht absolut dicht ist und meist ein Leckagestrom zu einer leichten Abkühlung und Verdünnung der Brenngase und damit lokal erhöhten CO- Emissionen führt. Durch Abschalten der an die Trennebene angrenzenden Brenner werden diese lokalen CO- Emissionen vermieden.

Als Kompromiss muss durch das Abschalten einzelner Brenner aber in Kauf genommen werden, dass mindestens zwei Brenner mit kalten, nicht betriebenen Nachbarbrennern arbeiten. Jede Grenze zu einem kalten Nachbarbrenner führt potentiell zu erhöhten CO- Emissionen, weshalb die Anzahl von Gruppen kalter Brenner zu minimieren ist. Abhängig von dem Design der Gasturbine, insbesondere von den Leckagen im Bereich der Trennebene, kann eine einzelne Gruppe abgeschalteter Brenner, zwei auf beiden Seiten der Trennebene angeordnete Gruppen abgeschalteter Brenner oder eine Vielzahl von Gruppen abgeschalteter Brenner vorteilhaft sein.

Eine weitere Möglichkeit die Luftzahl λ zu reduzieren ist ein geregeltes "Staging". Homogene Verbrennungsvorgänge können in Ringbrennkammern zu Pulsationen führen. Dies werden bei hoher Last typischerweise durch ein sogenanntes "Staging" vermieden. Unter Staging versteht man das Abblenden der Brennstoffzufuhr in mindestens einen Brenner. Dazu wird eine Blende oder ein anderes Drosselelement in die Brennstoffleitung des mindestens einen abzublendenden Brenner fest eingebaut. Die Luftzahl λ des mindestens einen abgeblendeten Brenners wird entsprechend der reduzierten Brennstoffmenge für alle Betriebszustände grösser. Bei hoher Last führt dies zu einer gewünschten Inhomogenität in der Ringbrennkammer. Bei tiefer Last führt diese Inhomogenität jedoch zu einem überproportionalen Anstieg der CO Produktion des mindestens einen abgeblendeten Brenners. Die Verbrennungsinstabilitäten, die durch das Staging vermieden werden sollen, treten in der Regel bei der tiefen Last nicht mehr auf oder sind vernachlässigbar klein. In einem Ausführungsbeispiel wird deshalb vorgeschlagen, die Abblendung nicht durch eine feste Blende durchzuführen, sondern durch mindestens ein Regelventil. Dies mindestens eine Regelventil wird bei tiefer Last geöffnet, damit alle eingeschalteten Brenner quasi homogen mit einer tiefen Luftzahl λ betrieben werden können. Bei hoher Last wird das mindestens eine Regelventil angedrosselt, um das Staging zu realisieren.

Das mindestens eine Regelventil kann in die Zuleitung von Einzelbrennern angeordnet sein. Alternativ können die Brenner auch in mindestens zwei Gruppen mit je einem Regelventil und je einer Ringleitung zur Verteilung des Brennstoffes zusammengefasst werden.

In einer weiteren Ausführung wird zur Reduktion der Luftzahl λ bei Teillast Verdichterendluft oder Verdichter- Abzapfluft (auch Bleed-Luft genannt) entspannt und der Ansaugluft zugemischt. Dies kann beispielsweise durch Einschalten eines sogenannten "Anti- Icing Systems", bei dem Luft aus dem Verdichterplenum in die Ansaugluft zur Erhöhung der Ansaugtemperatur zugemischt wird, realisiert werden. Die Abzweigung von Verdichterluft führt zu einer Reduktion der durch die Brennkammer strömenden Luftmenge. Ausserdem wird die auf die Gesamtleistung der Gasturbine bezogene Verdichterarbeit erhöht. Um die erhöhte Leistungsaufnahme des Verdichters zu kompensieren, muss die Turbinenleistung und damit die Brennstoffmenge erhöht werden. Beides führt zu einer Reduktion der Luftzahl λ und damit einer Reduktion der CO- Emissionen.

Weitere Möglichkeiten die CO- Emissionen zu reduzieren, eröffnen sich durch eine Regelung der Kühlluftmassenströme und/ oder der Kühllufttemperatur.

Bei Teillast kann beispielsweise die TIT1 reduziert werden. Entsprechend der reduzierten Heissgastemperatur werden die Heissgasteile kühler und die Kühlleistung kann durch eine Reduktion des Hochdruck- Kühlluftmassenstroms und/ oder Erhöhung der Hochdruck- Kühllufttemperatur nach Kühlluftkühler reduziert werden. Entsprechend der reduzierten Kühlleistung werden durch Kühlluft und Kühlluftleckagen verursachte kalte Strähnen oder Strömungsgebiete reduziert. Folglich wird das Temperaturprofil bei Eintritt in die zweite Brennkammer homogener. Mit dem homogenen Eintrittsprofil wird ein lokales Abkühlen der Flamme vermieden und damit die CO- Emissionen reduziert.

Entsprechend kann bei Teillast mit reduzierter TIT2 die Niederdruck- Kühlleistung durch eine Reduktion des Niederdruck- Kühlluftmassenstroms und/ oder Erhöhung der Niederdruck- Kühllufttemperatur nach Kühlluftkühler reduziert werden. Durch die reduzierte Kühlleistung werden direkt kalte Bereiche in der Brennkammer entschärft, dass heisst relativ zur Heissgastemperatur warme und kalte Strähnen reduziert und entsprechend die CO- Emissionen reduziert.

Alternativ kann je nach Kühlluftsystem die Niederdruck- Kühlluftmenge angehoben werden. Wenn ein grosser Teil der Niederdruck- Kühlluft in die zweite Turbine eingeleitet wird, kann damit der Luftmassenstrom durch die Brenner und Brennkammer reduziert werden. Die Luftzahl λ wird damit reduziert und eine Reduktion der CO- Emissionen kann erreicht werden.

Um das Niederdruck- Kühlluftsystem effektiv als Bypass für die Brennkammern, insbesondere als Bypass für die zweite Brennkammer nutzen zu können, ist in einer Ausführung der Erfindung eine Aufteilung des Niederdruckkühlluftsystems in einen Teil für die zweite Brennkammer und einen Teil für die zweite Turbine vorgeschlagen. Dabei ist der Kühlluftstrom für zumindest ein Teilsystem regelbar ausgeführt. Idealerweise sind beide Teilsysteme regelbar, so dass bei Teillast der Kühlluftmassenstrom in die Brenner und die Brennkammer reduziert wird während gleichzeitig der Kühlluftmassenstrom in die zweite Turbine erhöht wird.

Diese Regelung des Kühlluftsystems wird typischerweise in Abhängigkeit der Last oder relativen Last durchgeführt. Eine Regelung in Abhängigkeit der Stellung der Verdichtervorleitreihe, des Verdichteraustrittsdruckes, der TIT1, TIT2 oder eines anderen geeigneten Parameters sowie einer Kombination aus Parametern ist ebenfalls möglich.

Anstelle einer Regelung der Kühlluftmassenströme und/ oder Kühllufttemperatur kann beispielsweise auch eine Steuerung in Abhängigkeit von den selben Parametern oder Parameterkombinationen angewandt werden.

In einer weiteren Ausführung wird die Brennstofftemperatur, auf die der Brennstoff in einem Vorwärmer angehoben wird, in Abhängigkeit der Last geregelt. Zur Reduktion der CO- Teillastemissionen wird die Brennstofftemperatur bei Teillast angehoben. Durch Erhöhung der Brennstofftemperatur steigt die Reaktionsgeschwindigkeit und die Flamme wandert stromauf. Dies führt zu einer stabileren Flamme mit besserem Ausbrand und entsprechend reduzierten CO-Emissionen.

Diese Regelung des Brennstofftemperatur wird typischerweise in Abhängigkeit der Last oder relativen Last durchgeführt. Eine Regelung in Abhängigkeit der Stellung der Verdichtervorleitreihe, des Verdichteraustrittsdruckes, der TIT1, TIT2 oder eines anderen geeigneten Parameters sowie einer Kombination aus Parametern ist ebenfalls möglich.

Anstelle einer Regelung der Brennstofftemperatur kann beispielsweise auch eine Steuerung in Abhängigkeit von den selben Parametern oder Parameterkombinationen angewandt werden.

Neben dem Verfahren ist eine Gasturbine zur Durchführung des Verfahrens Gegenstand der Erfindung. Je nach gewähltem Verfahren oder Kombination von Verfahren muss die Auslegung der Gasturbine angepasst werden und/ oder das Brennstoffverteilsystem und/ oder das Kühlluftsystem angepasst werden, um die Durchführbarkeit des Verfahrens zu gewährleisten.

Um das Abschalten einzelner Brenner bei Teillast zu ermöglichen, ist in mindestens eine Brennstoffleitung zu mindestens einem Brenner der zweiten Brennkammer ein Einzelschaltventil vorzusehen.

Um ein lastabhängiges Staging zu realisieren, ist in mindestens eine Brennstoffleitung zu mindestens einem Brenner der zweiten Brennkammer ein Regelventil vorzusehen. Alternativ kann das Brennstoffverteilsystem in mindestens zwei Teilgruppen von Brennern mit zugehöriger Brennstoffverteilung aufgeteilt werden. Wobei jede Teilgruppe ein Brennstoffregelventil sowie eine Brennstoffringleitung zur Verteilung des Brennstoffes an die Brenner der jeweiligen Teilgruppe beinhaltet.

Um ein Öffnen der verstellbaren Verdichterleitreihe zu ermöglichen, ist eine Überprüfung des Pumpabstandes des Hochdruckverdichters und gegebenenfalls eine Anpassung des Druckaufbaus im Verdichter, beispielsweise durch umstaffeln der Beschaufelung, durchzuführen.

Um eine Erhöhung der Teillast- Turbinenaustrittstemperatur zu realisieren ist mindestens der Turbinenaustritt und die Abgasleitungen für eine Turbinenaustrittstemperatur auszulegen, die höher als die maximale Volllastabgastemperatur ist.

Um eine Regelung der Kühlluftmassenströme und Temperaturen zu realisieren, sind der oder die Kühlluftkühler regelbar auszuführen und Regelventile für die Kühlluftsysteme vorzusehen. Weiter sind die Systeme im Rahmen des erweiterten Betriebsbereiches für erhöhte Kühlluftströme und eine erhöhte Maximaltemperatur nach dem Kühler auszulegen.

Weitere Vorteile und Ausgestaltungen der Erfindung sind in den Unteransprüchen beschrieben und ergeben sich aus der Beschreibung und den beiliegenden Zeichnungen. Alle erläuterten Vorteile sind nicht nur in den jeweils angegebenen Kombinationen, sondern auch in anderen Kombinationen oder Alleinstellung verwendbar, ohne den Rahmen der Erfindung zu verlassen.

Eine Ausführung zeichnet sich beispielsweise durch eine Abstimmung verschiedener Komponenten zur Reduktion der lokal auftretenden Luftzahl λ aus. Alle Bauteile einer Gasturbine liegen im Bereich zulässiger Toleranzen. Diese Toleranzen führen für jede Komponente zu leicht unterschiedlichen Geometrien und Eigenschaften. Dies führt im Betrieb insbesondere auch zu unterschiedlichen Druckverlusten und Durchflüssen. Die Toleranzen sind so gewählt, dass sie im Normalbetrieb, insbesondere bei hoher Teillast und Volllast, praktisch keinen Einfluss auf das Betriebsverhalten haben. Bei Teillast mit hoher Luftzahl λ wird die Brennkammer aber unter Bedingungen betrieben, bei denen schon kleine Störungen einen signifikanten Einfluss auf die CO- Emissionen haben können. Wenn beispielsweise eine Brennstofflanze mit tiefer Durchflusszahl in einen Brenner mit grosser Querschnittsfläche eingebaut wird, kann diese Kombination zu einer Erhöhung der lokalen Luftzahl λ führen, die zu einer lokal erhöhten CO Produktion führt. Um dies zu vermeiden, wird ein Abstimmen von Komponenten zur Reduktion der lokal auftretenden Luftzahl λ vorgeschlagen. Dazu werden die Geometrien und/ oder Durchflusskoeffizienten der verschiedenen Bauteile gemessen und Teile mit hohen Durchflüssen und Teile mit tiefen Durchflüssen innerhalb der zweiten Brennkammer kombiniert.

Eine Brennerlanze ist ein Beispiel für eine Brennstoffzuführung in einen Brenner einer zweiten Brennkammer. Diese ist hier und im weiteren beispielhaft aufgeführt. Die Ausführungsbeispiele gelten genauso für andere Arten der Brennstoffzufuhr, wie zum Beispiel Rohre oder Profile mit Brennstoffdüsen.

Typisches Beispiel ist der Einbau von Brennerlanzen mit hohem Durchfluss in Brenner mit grossem Querschnitt und entsprechend tiefem Druckverlust.

Eine weitere Optimierungsmöglichkeit bietet sich durch die Abstimmung von zweiter Brennkammer auf die erste Brennkammer. Hierbei wird in der Regel ein Bauteil mit hohem Durchfluss in der ersten Brennkammer mit einem Bauteil mit tiefem Durchfluss in der zweiten Brennkammer kombiniert.

Beispielsweise wird nach einem Brenner der ersten Brennkammer, der einen hohen Brennstoffdurchfluss hat, eine Brennerlanze mit tiefem Durchfluss angeordnet. Der lokal hohe Durchfluss in der ersten Brennkammer führt zu einer lokal hohen Austritttemperatur aus der ersten Brennkammer und damit zu einer lokal erhöhten Eintrittstemperatur in den stromab liegenden Brenner der zweiten Brennkammer. Entsprechend der erhöhten Eintrittstemperatur für diesen Brenner, ist die Reaktionsgeschwindigkeit von in ihn eingespritzten Treibstoff höher als im Durchschnitt aller Brenner. Er kann daher mit einer lokal höheren maximalen Luftzahl λₘₐₓ betrieben werden. An dieser Position kann zur Abstimmung an die erste Brennkammer eine Lanze mit kleinem Durchflusskoeffizienten eingebaut werden.

### Kurze Beschreibung der Zeichnungen

Die Erfindung ist anhand von Ausführungsbeispielen in den Fig. 1 bis 11 schematisch dargestellt.

Es zeigen schematisch:
Fig. 1 eine Gasturbine mit sequentieller Verbrennung,
Fig. 2 einen Schnitt durch die zweite Brennkammer einer Gasturbine mit sequentieller Verbrennung sowie das Brennstoffverteilsystem mit einer Brennstoffringleitung und acht Einzelschaltventilen zum Abblenden von acht Brennern,
Fig. 3 einen Schnitt durch die zweite Brennkammer einer Gasturbine mit sequentieller Verbrennung sowie das Brennstoffverteilsystem mit einer Brennstoffringleitung und vier Einzelregelventilen zur Regelung des Brennstoffstroms von vier Brennern,
Fig. 4 einen Schnitt durch die zweite Brennkammer einer Gasturbine mit sequentieller Verbrennung sowie das Brennstoffverteilsystem mit zwei getrennt regelbaren Teilgruppen und zwei Brennstoffringleitungen,
Fig. 5 ein herkömmliches Verfahren zum Regeln einer Gasturbine mit sequentieller Verbrennung,
Fig. 6 ein Verfahren zum Regeln einer Gasturbine mit sequentieller Verbrennung, bei dem während des Auflastens während des Betriebs mit nur der ersten Brennkammer die verstellbare Verdichterleitreihe geöffnet wird, bis sie beim Zuschalten der zweiten Brennkammer schlagartig geschlossen wird,
Fig. 7 ein Verfahren zum Regeln einer Gasturbine mit sequentieller Verbrennung, bei dem während des Auflastens nach Zuschalten der zweiten Brennkammer die TAT Begrenzungen über das Volllastlimit angehoben werden,
Fig. 8 einen Querschnitt durch die zweite Brennkammer einer Gasturbine mit sequentieller Verbrennung, in der alle Brenner im Betrieb sind,
Fig. 8a einen Querschnitt durch die zweite Brennkammer einer Gasturbine mit sequentieller Verbrennung, in der links und rechts je die an die Trennebene angrenzenden Brenner ausgeschaltet sind und die übrigen Brenner in Betrieb sind,
Fig. 8b einen Querschnitt durch die zweite Brennkammer einer Gasturbine mit sequentieller Verbrennung, in der links und rechts je zwei an die Trennebene angrenzenden Brenner ausgeschaltet sind und die übrigen Brenner in Betrieb sind,
Fig. 9a einen Querschnitt durch die zweite Brennkammer einer Gasturbine mit sequentieller Verbrennung, in der rechts ein an die Trennebene angrenzender Brenner ausgeschaltet ist und die übrigen Brenner in Betrieb sind,
Fig. 9b einen Querschnitt durch die zweite Brennkammer einer Gasturbine mit sequentieller Verbrennung, in der links und rechts je ein an die Trennebene angrenzender Brenner ausgeschaltet ist und die übrigen Brenner in Betrieb sind,
Fig. 10 einen Querschnitt durch die zweite Brennkammer einer Gasturbine mit sequentieller Verbrennung, in der drei Gruppen von Brennern ausgeschaltet sind und die übrigen Brenner in Betrieb sind,
Fig. 11 einen Querschnitt durch die zweite Brennkammer einer Gasturbine mit sequentieller Verbrennung, in der eine Gruppe von Brennern ausgeschaltet ist und die übrigen Brenner in Betrieb sind.

### Ausführung der Erfindung

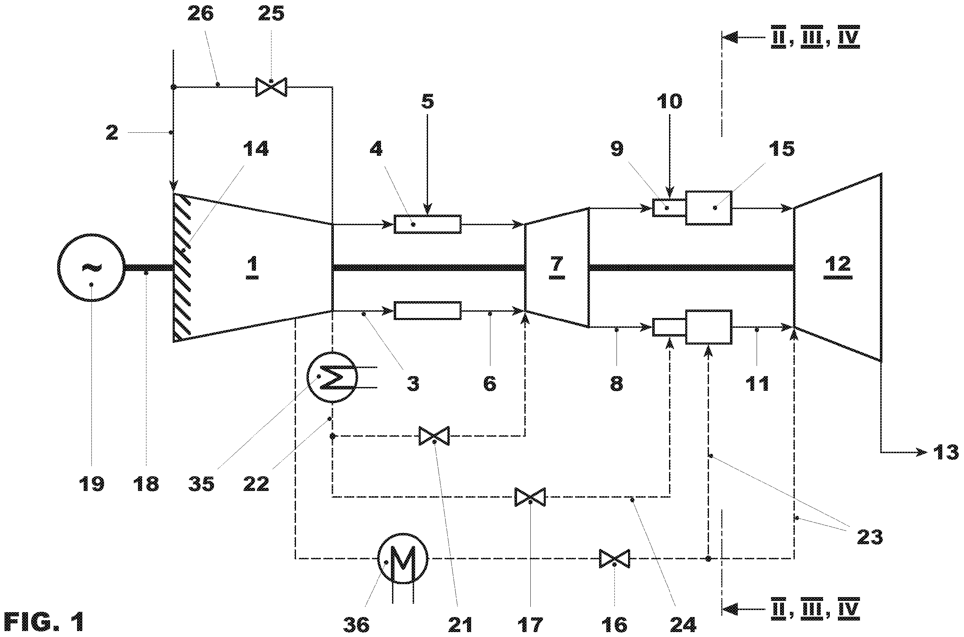

Fig. 1 zeigt eine Gasturbine mit sequentieller Verbrennung zur Durchführung des erfindungsgemässen Verfahrens. Sie besteht aus einem Verdichter 1, einer ersten Brennkammer 4, einer ersten Turbine 7, einer zweiten Brennkammer 15 und einer zweiten Turbine 12. Typischerweise umfasst sie einen Generator 19, der am kalten Ende der Gasturbine, dass heisst am Verdichter 1 an eine Welle 18 der Gasturbine angekuppelt ist.

Ein Brennstoff, Gas oder Öl, wird über eine Brennstoffzuführung 5 in die erste Brennkammer 4 eingeleitet, mit im Verdichter 1 verdichteter Luft vermischt und verbrannt. Die Heissgase 6 werden unter Arbeitsabgabe in der nachfolgenden ersten Turbine 7 teilentspannt.

Sobald die zweite Brennkammer in Betrieb ist, wird den teilentspannten Gasen 8 in Brennern 9 der zweiten Brennkammer 15 über eine Brennstoffzuführung 10 weiterer Brennstoff zugemischt und in der zweiten Brennkammer 15 verbrannt. Die Heissgase 11 werden unter Arbeitsabgabe in der nachfolgenden zweiten Turbine 12 entspannt. Die Abgase 13 können nutzbringend einem Abhitzekessel eines Kombikraftwerkes oder einer anderen Abwärmenutzung zugeführt werden.

Zur Regelung des Ansaugmassenstroms verfügt der Verdichter 1 über mindestens eine verstellbare Verdichterleitreihe 14.

Um die Temperatur der Ansaugluft 2 anheben zu können, ist eine Anti- Icing Leitung 26 vorgesehen durch die ein Teil der verdichteten Luft 3 der Ansaugluft 2 zugeführt werden kann. Zur Regelung ist ein Anti- Icing Regelventil 25 vorgesehen. Dies wird herkömmlich an kalten Tagen mit hoher relativer Luftfeuchte in der Umgebungsluft eingeschaltet, um einer Vereisungsgefahr des Verdichters vorzubeugen.

Ein Teil der verdichteten Luft 3 wird als Hochdruckkühlluft 22 abgezweigt, über einen Hochdruck- Kühlluftkühler 35 rückgekühlt und der ersten Brennkammer 4 (Kühlluftleitung nicht dargestellt) und der ersten Turbine als Kühlluft 22 zugeführt. Der Massenstrom der Hochdruckkühlluft 22, der der Hochdruckturbine 7 zugeführt wird, kann in dem Beispiel durch ein Hochdruckkühlluft- Regelventil 21 geregelt werden.

Ein Teil Hochdruckkühlluft 22 wird als sogenannte Trägerluft 24 in die Brennerlanzen der Brenner 9 der zweiten Brennkammer 15 zugeführt. Der Massenstrom der Trägerluft 24 kann durch ein Trägerluft- Regelventil 17 geregelt werden.

Aus dem Verdichter 1 wird ein Teil der Luft teilverdichtet abgezweigt, über einen Niederdruck- Kühlluftkühler 36 rückgekühlt und der zweiten Brennkammer 15 und der zweiten Turbine als Kühlluft 23 zugeführt. Der Massenstrom der Kühlluft 23 kann in dem Beispiel durch ein Kühlluft- Regelventil 16 geregelt werden.

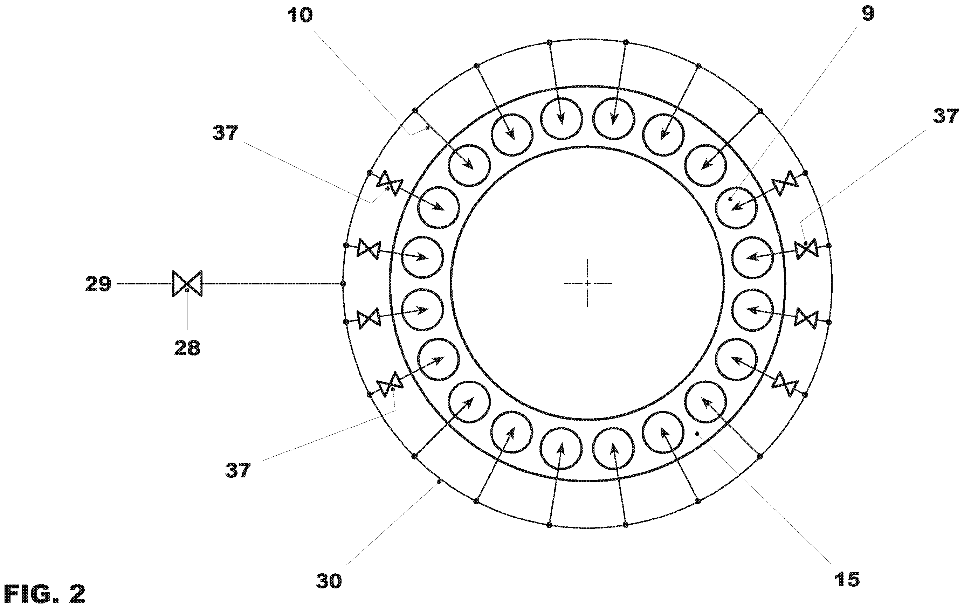

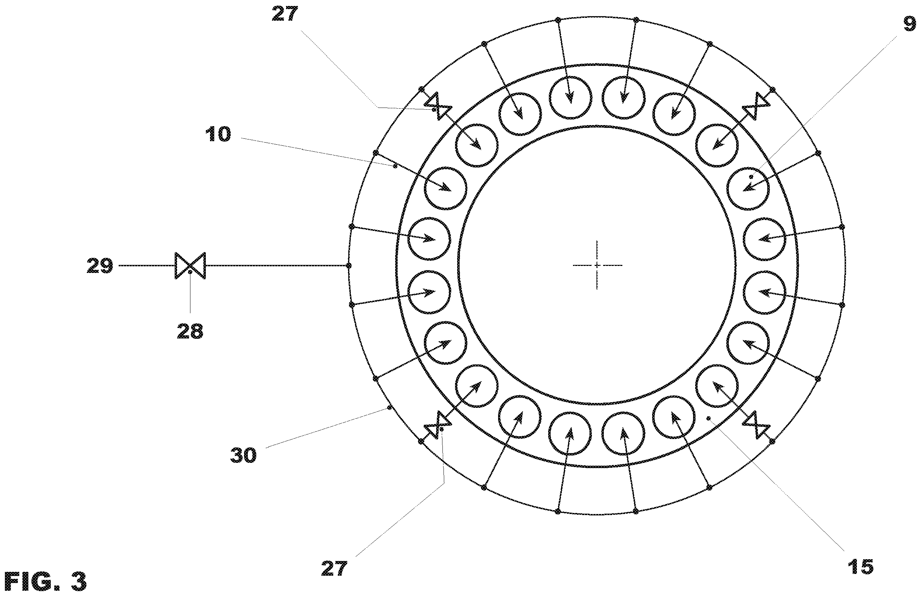

Die Brennkammern sind beispielsweise als Ringbrennkammern mit einer Vielzahl von Einzelbrennern 9 ausgeführt, wie es in Fig. 2 und 3 am Beispiel der zweiten Brennkammer 15 gezeigt ist. Jeder dieser Brenner 9 wird über ein Brennstoffverteilsystem und Brennstoffzuführung 10 mit Brennstoff versorgt.

Fig. 2 einen Schnitt durch die zweite Brennkammer 15 mit Brennern 9 einer Gasturbine mit sequentieller Verbrennung sowie das Brennstoffverteilsystem mit einer Brennstoffringleitung 30 und acht Einzelschaltventilen 37 zum Ausschalten von acht Brennern 9. Durch Schliessen von Einzelschaltventilen 37 wird die Brennstoffzufuhr zu einzelnen Brennern 9 gestoppt und dieser auf die verbleibenden Brenner verteilt, wobei der Gesamtbrennstoffmassenstrom über ein Regelventil 28 geregelt wird. Damit wird der die Luftzahl λ der für die in Betrieb befindlichen Brenner 9 reduziert.

Fig. 3 zeigt einen Schnitt durch die zweite Brennkammer 15 sowie ein Brennstoffverteilsystem mit einer Brennstoffringleitung 30 und Brennstoffzuführungen 10 zu den einzelnen Brennern 9. In dem Beispiel sind vier Brenner 9 mit Einzelregelventilen 27 zur Regelung des Brennstoffstroms in den Brennstoffzuführungen 10 der jeweiligen Brenner 9 versehen. Der Gesamtbrennstoffmassenstrom wird über ein Regelventil 28 geregelt. Die getrennte Regelung des Brennstoffmassenstroms zu den vier Brennern 9 mit Einzelregelventil 27 erlaubt ein Staging. Die vier Einzelregelventile sind bei tiefer Teillast voll geöffnet, damit in alle Brenner 9 der zweiten Brennkammer 15 gleichmässig Brennstoff eingebracht wird, so dass alle Brenner 9 zur Minimierung der CO- Emissionen mit der gleichen Luftzahl λ betrieben werden. Mit steigender relativer Last, insbesondere wenn beispielsweise oberhalb von 70% relativer Last erhöhte Pulsationen auftreten können, werden die Einzelregelventile 27 leicht geschlossen, um ein Staging zu realisieren und damit die Verbrennung zu stabilisieren. Dabei wird die Luftzahl λ der über die leicht geschlossenen Einzelregelventile 27 versorgten Brenner 9 erhöht. Dies ist jedoch bei der hohen Last in bezug auf die CO- Emissionen unkritisch.

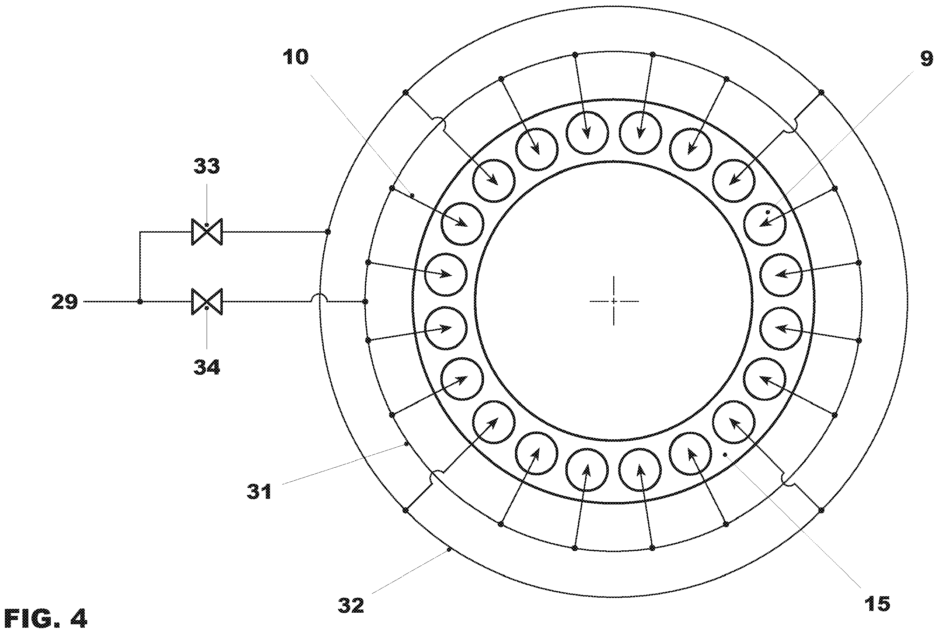

Fig. 4 zeigt einen Schnitt durch die zweite Brennkammer 15 einer Gasturbine mit sequentieller Verbrennung sowie das Brennstoffverteilsystem mit zwei getrennt regelbaren Teilgruppen von Brennern. Diese weisen je eine Brennstoffringleitung für eine erste Teilgruppe 31 und eine Brennstoffringleitung für eine zweite Teilgruppe 32 sowie den zugehörigen Brennstoffzuführungen 10 auf. Zur unhabhängigen Regelung der Brennstoffmenge beider Teilsysteme ist ein Brennstoffregelventil für die erste Teilgruppe 33 und ein Brennstoffregelventil für die zweite Teilgruppe 34 vorgesehen.

Die beiden Regelventile für die erste und die zweite Teilgruppe 33, 34 sind bei tiefer Teillast so geregelt, dass der Brennstoffmassenstrom pro Brenner gleich ist.

Damit wird in alle Brenner 9 der zweiten Brennkammer 15 gleichmässig Brennstoff eingebracht, so dass alle Brenner 9 zur Minimierung der CO-Emissionen mit der gleichen Luftzahl λ betrieben werden. Mit steigender relativer Last, insbesondere falls beispielsweise oberhalb von 70% relativer Last erhöhte Pulsationen auftreten, wird das Regelventil der ersten Teilgruppe 33 nicht so stark weiter geöffnet, wie das Regelventil der zweiten Teilgruppe 34, um ein Staging zu realisieren und damit die Verbrennung zu stabilisieren.

Alternativ kann dass Regelventil der ersten Teilgruppe 33 stromab des zweiten Regelventils 34 angeschlossen werden. In dem Fall ist analog zu dem Beispiel aus Fig. 3 bei Teillast das Regelventil der ersten Teilgruppe 33 ganz zu öffnen und bei hoher Teillast anzudrosseln, um dann ein Staging zu realisieren. Der Gesamtbrennstoffmassenstrom wird dann über das Regelventil 34 geregelt.
Im Fall, dass der Brennstoff ein Flüssigbrennstoff, wie zum Beispiel Öl ist, wird je nach Art des Brenners eine Wassereinspritzung zur Reduktion der NOx Emissionen erforderlich. Diese wird beispielsweise analog zu der Brennstoffversorgung durchgeführt und es sind entsprechende Leitungen und Regelsysteme vorzusehen.

Bei sogenannten Dual Fuel Gasturbinen, die sowohl mit einem Flüssigbrennstoff wie beispielsweise Öl als auch mit einem Brenngas, wie beispielsweise Erdgas, betrieben werden können, sind für jeden Brennstoff separate Brennstoffverteilsysteme vorzusehen.

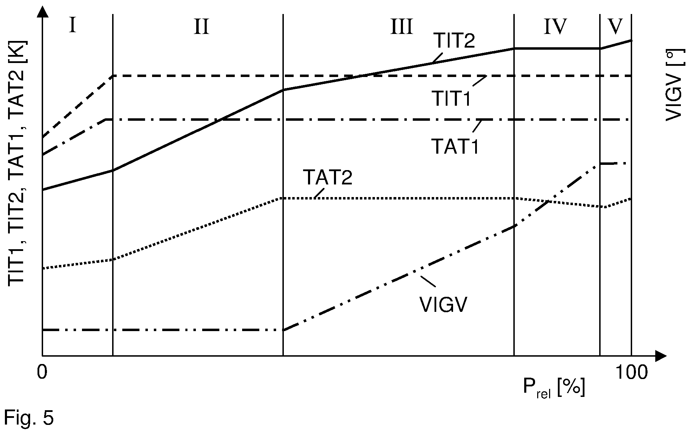

Fig. 5 zeigt ein herkömmliches Verfahren zum Regeln einer Gasturbine mit sequentieller Verbrennung. Ausgehend von Leerlauf, dass heisst einer relativen Last Pᵣₑₗ von 0%, wird die Gasturbine bis zu Volllast, dass heisst einer relativen Last Pᵣₑₗ von 100%, belaset. Bei 0% Pᵣₑₗ ist die verstellbare Verdichterleitreihe geschlossen, dass heisst auf einen minimalen Öffnungswinkel eingestellt.

Die erste Brennkammer ist gezündet, was zu einer Turbineneintrittstemperatur TIT1 der ersten Turbine 7 und einer korrespondierenden Turbinenaustrittstemperatur TAT1 führt. Die zweite Brennkammer ist noch nicht in Betrieb, so dass keine Erwärmung der Gase in der zweiten Brennkammer statt findet. Die Temperatur TAT1 der aus der ersten Turbine 7 austretenden Gase wird durch die Brennkammerkühlung sowie Berücksichtigung der Niederdruck-Turbinenkühlung auf die Turbineneintrittstemperatur TIT2 der zweiten Turbine 12 reduziert. Aus der zweiten Turbine 12 treten die entspannten Gase mit einer Temperatur TAT2 aus.

In einer Phase I des Verfahrens wird ausgehend von 0% Pᵣₑₗ zur Leistungserhöhung zunächst die TIT1 bis zu einem TIT1- Limit angehoben. Mit steigender TIT1 steigt auch die Austrittstemperatur TAT1 und die Temperaturen TIT2 und TAT2 der nachfolgenden zweiten Turbine 12.

Um nach Erreichen des TIT1- Limits die Leistung weiter anzuheben, wird am Anfang der Phase II die zweite Brennkammer 15 gezündet und die Brennstoffzufuhr 10 in die Brenner 9 der zweiten Brennkammer proportional zur Last erhöht. Die TIT2 und TAT2 steigen über Last in der Phase II entsprechend mit einem steilen Gradienten bis ein erstes Limit der TAT2 erreicht wird. Herkömmlich ist das TAT2- Limit identisch mit einem TAT2- Volllastlimit.

Um nach Erreichen des TAT2- Limits die Leistung weiter anzuheben, wird in einer Phase III des Verfahrens die verstellbare Verdichterleitreihe 14 geöffnet, um durch Erhöhung des Ansaugmassenstroms die Leistung zu regeln. Proportional zu dem Ansaugmassenstrom steigt das Druckverhältnis der zweiten Turbine 12, weshalb bei konstanter TAT2 die TIT2 über der relativen Leistung Pᵣₑₗ weiter zunimmt bis ein erstes TIT2- Limit erreicht wird.

Um nach Erreichen des ersten TIT2- Limits die relative Last Pᵣₑₗ weiter anzuheben, wird in einer Phase IV des Verfahrens die verstellbare Verdichterleitreihe 14 bei konstanter TIT2 weiter geöffnet, bis sie die maximal geöffnete Position erreicht.

In dem gezeigten Beispiel wird in einer Phase V des Verfahrens die TIT2 bei konstanter Position der verstellbaren Verdichterleitreihe 14 von dem ersten TIT2 Limit zu einem zweiten TIT2- Limit angehoben, bis 100% Pᵣₑₗ erreicht sind.

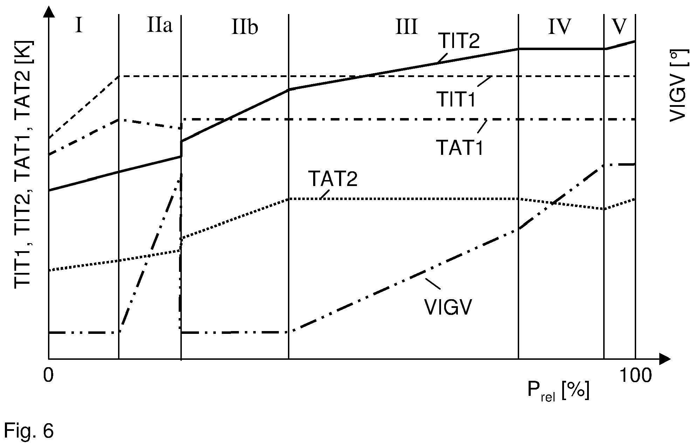

Fig. 6 zeigt ein Verfahren zum Regeln einer Gasturbine mit sequentieller Verbrennung, bei dem gegenüber dem in Bild 5 gezeigten Verfahren die Phase II modifiziert wurde. Die Phase II ist hier in zwei Teile geteilt. Sobald das Limit der TIT1 am Ende der Phase I erreicht wird, wird einer Phase IIa die Last erhöht, indem die verstellbare Verdichterleitreihe 14 geöffnet wird. Die zweite Brennkammer 15 ist während der Phase IIa noch nicht in Betrieb. Sobald die verstellbare Verdichterleitreihe 14 am Ende der Phase IIa die offen Position erreicht hat, wird die zweite Brennkammer 15 zugeschaltet und die verstellbare Verdichterleitreihe 14 schnell geschlossen. Synchron zum Schliessen der verstellbaren Verdichterleitreihe 14 wird der Brennstoffmassenstrom, der in die zweite Brennkammer 15 eingebracht wird, erhöht. Damit wird die zweite Brennkammer erst bei deutlich höherer Last mit deutlich erhöhtem Brennstoffmassenstrom und deutlich erhöhter TIT2 stationär betrieben.
Da der Ansaugmassenstrom, sobald die zweite Brennkammer stationär in Betrieb ist, unverändert der Minimalstrom ist, wird die Luftzahl λ deutlich reduziert und damit die CO- Emissionen reduziert. In der Phase IIb wird die Leitung durch Erhöhen der TIT2 bis zum Erreichen des TAT2- Limits analog zu dem für die Phase II beschrieben Verfahren angehoben. Während des schnellen Schliessens der verstellbaren Verdichterleitreihe 14 kann es zu erhöhten CO- Emissionen kommen, weshalb diese mit einer möglichst hohen Winkelgeschwindigkeit zugefahren werden. Die Winkelgeschwindigkeit wird zum einen durch die Limite der Stellglieder der verstellbaren Verdichterleitreihe 14 begrenzt zum anderen kann es bei zu schnellem Schliessen zu Lastschwankungen und Problemen in der Regelung der Turbineneintrittstemperaturen kommen. Auch wenn die Stellglieder ein Schliessen der verstellbaren Verdichterleitreihe 14 innerhalb weniger Sekunden zulassen, wird die verstellbare Verdichterleitreihe 14 beispielsweise in einem Zeitintervall von wenigen Minuten, bevorzugt in einem Intervall von weniger als einer halben Minute geschlossen.

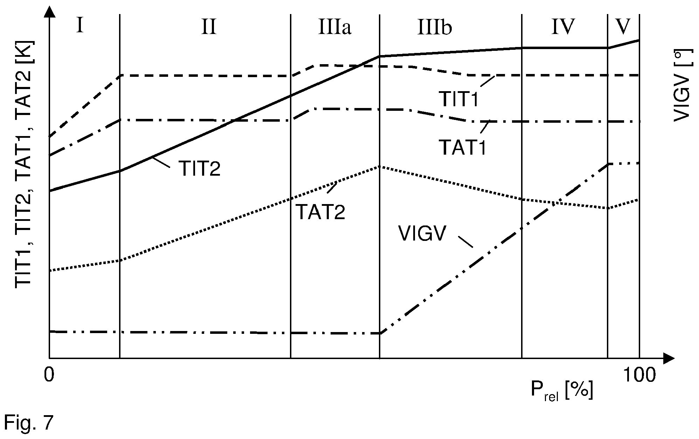

Fig. 7 zeigt ein Verfahren zum Regeln einer Gasturbine mit sequentieller Verbrennung, bei dem gegenüber dem in Bild 5 gezeigten Verfahren die Phase III modifiziert wurde. In der Figur 7 sind zwei Modifikationen dargestellt.

Die erste Modifikation der Phase III ist ein Anheben des TAT2 Limits auf ein zweites Limit, welches höher als das TAT2 Volllastlimit liegt. Dies erlaubt ein weiteres Anheben der TIT2, bis das zweite TAT2 Limit erreicht wird. Dabei bleibt die verstellbare Verdichterleitreihe 14 bis zum Ende der Phase IIIa geschlossen. Dadurch, dass die verstellbare Verdichterleitreihe 14 geschlossen bleibt und mit der TIT2 der Brennstoffmassenstrom steigt, wird die Luftzahl λ deutlich reduziert und damit die CO- Teillastemissionen reduziert. In der Phase IIIb wird das TAT2 Limit proportional zur Last reduziert, bis am Ende der Phase das erste TAT2 Limit erreicht wird. Um trotz sinkender TAT2 die Leistung zu erhöhen, wird die verstellbare Verdichterleitreihe 14 mit einem steilen Gradienten geöffnet. Proportional zum Öffnen der verstellbaren Verdichterleitreihe 14 nimmt der Massenstrom und damit das Druckverhältnis über die zweite Turbine 12 zu. Mit dem Druckverhältnis steigt das Temperaturverhältnis von TIT2 zu TAT2, so dass trotz sinkender TAT2 die TIT2 weiter steigt, bis sie am Ende der Phase IIIb das erste TIT2- Limit erreicht.

Die zweite in Fig. 7 dargestellte Modifikation ist ein Anheben von TIT1 und TAT1 am Anfang der Phase IIIa. Die gezeigte Anhebung ist nur beispielhaft während der Phase III gezeigt. Sie ist unabhängig von den Eckpunkten des Verfahrens oder der Phasen. Sie kann in jedem CO- emissionskritischen Teillastbereich durchgeführt werden. Die Luftzahl λ wird hier nicht direkt beeinflusst. Die minimale Luftzahl λₘᵢₙ zum Erreichen einer emissionsarmen Verbrennung ist abhängig von den Randbedingungen der Verbrennung. Durch Erhöhen der TAT1 werden diese Randbedingungen verbessert. Durch Anheben der TAT1 steigt die Temperatur und Reaktionsgeschwindigkeit in der zweiten Brennkammer 15, wodurch der Ausbrand verbessert wird und die CO- Emissionen reduziert werden.

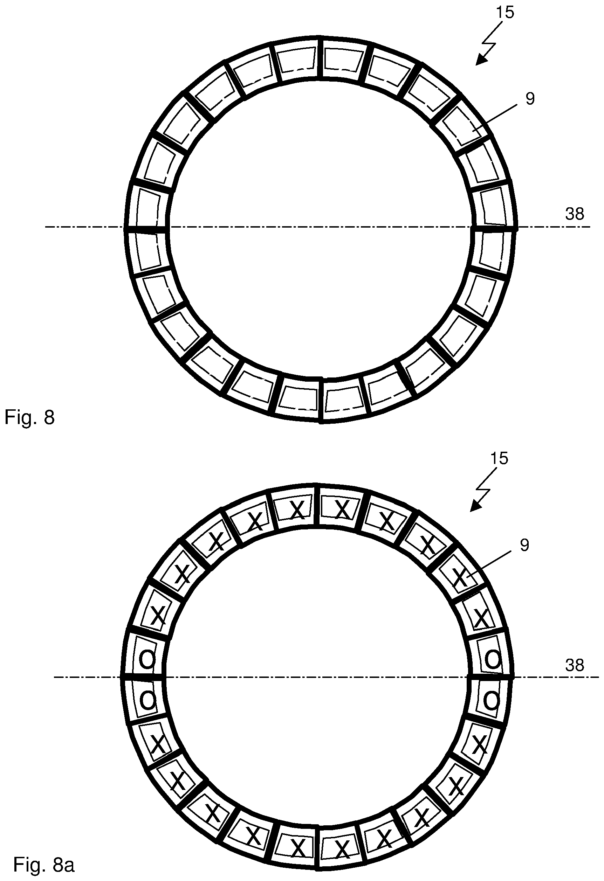

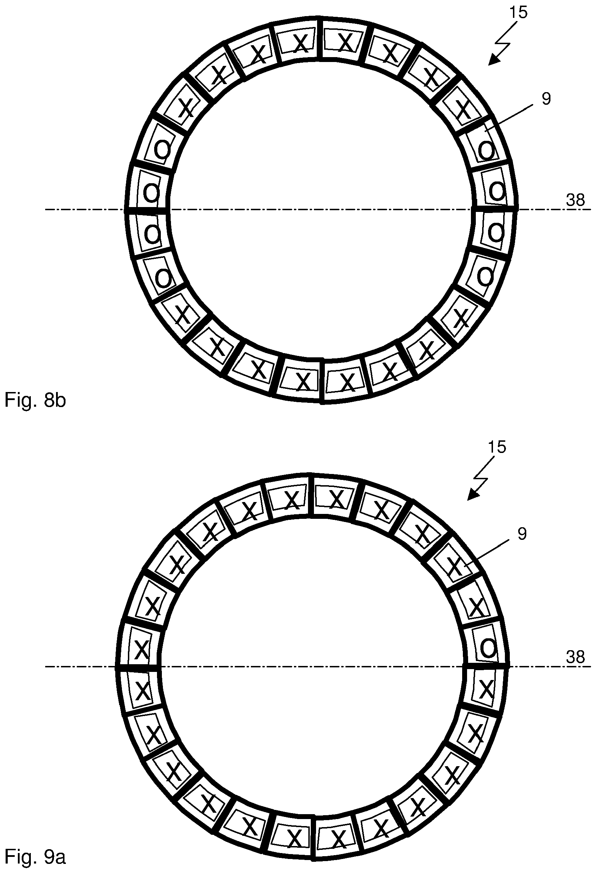

Fig. 8 zeigt einen schematischen Querschnitt durch die zweite Brennkammer 15 einer Gasturbine mit sequentieller Verbrennung, in der alle Brenner 9 im Betrieb sind. Sie sind jeweils mit einem x als in Betrieb gekennzeichnet.

Fig. 8a zeigt einen Querschnitt durch die zweite Brennkammer 15 einer Gasturbine mit sequentieller Verbrennung, in der links und rechts je die an die Trennebene 38 angrenzenden Brenner 9 ausgeschaltet sind und die übrigen Brenner 9 in Betrieb sind. Die ausgeschalteten Brenner 9 sind mit einem o als nicht in Betrieb gekennzeichnet.

Fig. 8b zeigt einen Querschnitt durch die zweite Brennkammer 15 einer Gasturbine mit sequentieller Verbrennung, in der links und rechts je zwei an die Trennebene 38 angrenzenden Brenner 9 ausgeschaltet sind und die übrigen Brenner 9 in Betrieb sind.

Zum Schalten der Einzelbrenner in Fig. 8a und 8b können beispielsweise, wie in Fig. 2 gezeigt, Einzelschaltventile in den Brennstoffzuführungen 10 zu den einzelnen Brennern 9 vorgesehen werden. In einer Ausführung des Verfahrens sind bei hoher relativer Last Pᵣₑₗ alle Brenner 9 im Betrieb. Bei Absenken der Last unter einen Grenzwert der Pᵣₑₗ werden zunächst entsprechend Fig. 8a die an die Trennebene 38 angrenzenden Brenner 9 ausgeschaltet.

Nach einem weiteren Absenken der Last unter einen tieferen Grenzwert der Pᵣₑₗ werden weiter entsprechend Fig. 8b auch die Brenner 9 ausgeschaltet, die zwei Positionen von Trennebene 38 entfernt sind.

Fig. 9a zeigt einen Querschnitt durch die zweite Brennkammer 15 einer Gasturbine mit sequentieller Verbrennung, in der rechts ein an die Trennebene 38 angrenzender Brenner 9 ausgeschaltet ist und die übrigen Brenner 9 in Betrieb sind,

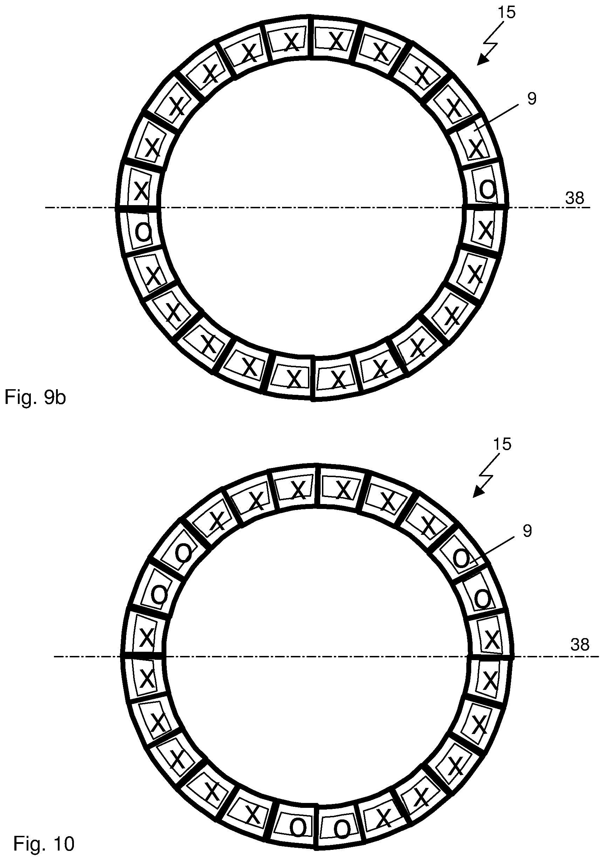

Fig. 9b zeigt einen Querschnitt durch die zweite Brennkammer 15 einer Gasturbine mit sequentieller Verbrennung, in der links und rechts je ein an die Trennebene 38 angrenzender Brenner 9 ausgeschaltet ist und die übrigen Brenner 9 in Betrieb sind,

Alternativ zu dem in Fig. 8a/b gezeigten Abschalten von Brennerteilgruppen können ausgehend von hoher Last, bei der alle Brenner 9 in Betrieb sind, auch einzelne Brenner 9 ausgeschaltet werden. Zunächst wird, wie in Fig. 9a gezeigt, nur ein auf in Blickrichtung links liegender an die Trennebene 38 angrenzender Brenner 9 ausgeschaltet. Im nächsten Schritt wird ein in Blickrichtung rechts liegender an die Trennebene 38 angrenzender Brenner 9 ausgeschaltet.

Alternierend können umgekehrt proportional zur Last weitere Brenner 9 abgeschaltet werden.

Fig. 10 zeigt einen Querschnitt durch die zweite Brennkammer 15 einer Gasturbine mit sequentieller Verbrennung, in der drei Gruppen von Brennern 9 ausgeschaltet sind und die übrigen Brenner 9 in Betrieb sind. Eine derartige Konfiguration kann beispielsweise dann gewählt werden, wenn der Einfluss der Leckagen an der Trennebene 38 auf die CO- Emissionen klein ist und ausserdem der Einfluss von ausgeschalteten, kalten Nachbarbrenner auf die CO- Emissionen der eingeschalteten Brenner 9 klein ist. Vorteil dieser Anordnung ist ein relativ homogenes Temperaturprofil am Austritt der Brennkammer 15.

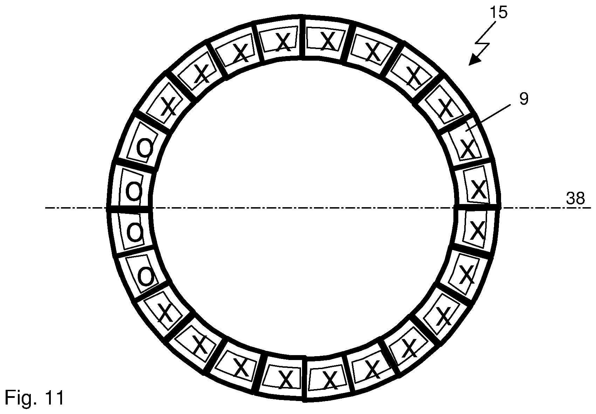

Fig. 11 zeigt einen Querschnitt durch die zweite Brennkammer 15 einer Gasturbine mit sequentieller Verbrennung, in der nur eine Gruppe von Brennern 9 ausgeschaltet ist und die übrigen Brenner 9 in Betrieb sind. Diese Anordnung ist vorteilhaft, wenn der Einfluss von ausgeschalteten, kalten Nachbarbrenner auf die CO- Emissionen der eingeschalteten Brenner 9 sehr gross ist und das dabei entstehende schlechte Austrittstemperaturprofil der Brennkammer 15 von der nachfolgenden zweiten Turbine 12 toleriert werden kann oder die Kühlung an das Temperaturprofil angepasst werden kann.

Alle erläuterten Vorteile sind nicht nur in den angegebenen Kombinationen beschränkt, sondern auch in anderen Kombinationen oder Alleinstellung verwendbar, ohne den Rahmen der Erfindung zu verlassen. Beispielsweise sind beliebig andere Möglichkeiten denkbar, einzelne Brenner 9 oder Gruppen von Brennern 9 aus zu schalten.

### Bezugszeichenliste

- 1: Verdichter
- 2: Ansaugluft
- 3: Verdichtete Luft
- 4: Erste Brennkammer
- 5: Brennstoffzuführung
- 6: Heissgase
- 7: Erste Turbine
- 8: Teilentspannte Heissgase
- 9: Brenner der zweiten Brennkammer
- 10: Brennstoffzuführung
- 11: Heissgase
- 12: Zweite Turbine
- 13: Abgase (zum Abhitzekessel)
- 14: Verstellbare Verdichterleitschaufeln
- 15: Zweite Brennkammer
- 16: Niederdruck- Kühlluftregelventil
- 17: Trägerluft- Regelventil
- 18: Welle
- 19: Generator
- 20 21: Hochdruckkühlluft- Regelventil
- 22: Hochdruckkühlluft
- 23: Kühlluft
- 24: Trägerluft
- 25: Anti- Icing Regelventil
- 26: Anti- Icing Leitung
- 27: Einzelregelventil
- 28: Brennstoffregelventil
- 29: Brennstoffzufuhr
- 30: Brennstoffringleitung
- 31: Brennstoffringleitung für erste Teilgruppe
- 32: Brennstoffringleitung für zweite Teilgruppe
- 33: Brennstoffregelventil für erste Teilgruppe
- 34: Brennstoffregelventil für zweite Teilgruppe
- 35: Hochdruck- Kühlluftkühler
- 36: Niederdruck- Kühlluftkühler
- 37: Einzelschaltventil
- 38: Trennebene
- TAT: Turbinenaustrittstemperatur
- TAT1: Turbinenaustrittstemperatur der ersten Turbine
- TAT2: Turbinenaustrittstemperatur der zweiten Turbine
- TIT: Turbineneintrittstemperatur
- TIT1: Turbineneintrittstemperatur der ersten Turbine
- TIT2: Turbineneintrittstemperatur der zweiten Turbine
- Pᵣₑₗ: relative Leistung
- X: eingeschalteter Brenner
- O: ausgeschalteter Brenner

## Patentansprüche

1. Verfahren zum CO- emissionsarmen Betrieb einer Gasturbine mit sequentieller Verbrennung, wobei die Gasturbine im wesentlichen aus mindestens einem Verdichter (1), mit einer Reihe verstellbaren Verdichterleitschaufelreihe (14), einer ersten dem Verdichter nachgeschalteten Brennkammer (4), deren Heissgase eine erste Turbine (7) beaufschlagen und einer der ersten Turbine (7) nachgeschalteten zweiten Brennkammer (15), deren Heissgase eine zweite Turbine (12) beaufschlagen, besteht, wobei die Luftzahl (λ) der operativen Brenner (9) der zweiten Brennkammer (15) unter einer maximalen Luftzahl (λₘₐₓ) gehalten wird, **dadurch gekennzeichnet, dass** die Brennstoffzufuhr (10) zu mindestens einem Brenner (9) der zweiten Brennkammer (15) bei Teillast abgeschaltet wird, so dass bei unveränderter Turbineneintrittstemperatur der zweiten Turbine (TIT2) die Luftzahl (X) der sich in Betrieb befindlichen Brenner (9) reduziert wird und dass das Teillastlimit der Turbinenaustrittstemperatur der ersten (TATI) und/ oder der zweiten Turbine (TAT2) für einen Teillastbereich angehoben wird, um das Öffnen der verstellbaren Verdichterleitreihe (14) zu einer höheren Last zu verschieben und dass ein Teilstrom von komprimierter oder teilkomprimierter Verdichterluft entspannt wird und der Ansaugluft (2) zugemischt wird.

2. Verfahren nach Anspruch 1, **dadurch gekennzeichnet, dass** bei einer Lasterhöhung vor Einschalten der zweiten Brennkammer (15) zunächst die Turbineneintrittstemperatur der ersten Turbine (TIT1) auf ein Teillastlimit erhöht wird und die verstellbare Verdichterleitschaufelreihe (14) geöffnet wird, zum Einschalten oder beim Einschalten der zweiten Brennkammer (15) die verstellbare Verdichterleitschaufelreihe (14) geschlossen wird und Brennstoff in die zweite Brennkammer (15) eingeleitet wird.

3. Verfahren nach Anspruch 1, **dadurch gekennzeichnet, dass** bei einem Ablasten vor Ausschalten der zweiten Brennkammer (15) zunächst verstellbare Verdichterleitschaufelreihe (14) geschlossen wird und diese beim Ausschalten der zweiten Brennkammer wieder geöffnet wird.

4. Verfahren nach einem der Ansprüche 1 bis 3, **dadurch gekennzeichnet, dass** bei einem Ablasten der Gasturbine, um eine Hysterese zu erzeugen, die zweite Brennkammer (15) erst bei einer Last abgestellt wird, die unter der Last liegt, die bei Betrieb mit der ersten Brennkammer (4) bei dem Teillastlimit der Turbineneintrittstemperatur der ersten Turbine (TIT1) und geöffneter verstellbaren Verdichterleitschaufelreihe (14) erreicht wird.

5. Verfahren nach Anspruch 4 **dadurch gekennzeichnet, dass** die Brennstoffzufuhr (10) als erstes zu dem mindestens einem an eine Trennebene (38) angenzenden Brenner (9) abgeschaltet wird.

6. Verfahren nach Anspruch 4 oder 5 **dadurch gekennzeichnet, dass** die Anzahl der abgeschalteten Brenner (9) umgekehrt proportional zur Last ist.

7. Verfahren nach einem der Ansprüche 1 bis 6, **dadurch gekennzeichnet, dass** mindestens eine Kühllufttemperatur und/ oder mindestens ein Kühlluftmassenstrom (22, 23, 24) abhängig von der Last geregelt wird.

8. Verfahren nach einem der Ansprüche 1 bis 7 **dadurch gekennzeichnet, dass** die Brennstofftemperatur der ersten und/ oder zweiten Brennkammer (4, 15) abhängig von der Last geregelt wird.

## Claims

1. Method for the low CO-emission operation of a gas turbine with sequential combustion, wherein the gas turbine comprises substantially at least one compressor (1) with an adjustable compressor guide vane row (14), a first combustion chamber (4) arranged downstream of the compressor, the hot gases from which load a first turbine (7), and a second combustion chamber (15) connected downstream of the first turbine (7), the hot gases from which load a second turbine (12), wherein the air ratio (λ) of the operative burner (9) of the second combustion chamber (15) is kept below a maximum air ratio (λₘₐₓ),
**characterised in that** the fuel supply (10) to at least one burner (9) of the second combustion chamber (15) is shut off under partial load, so that with unchanged turbine inlet temperature of the second turbine (TIT2), the air ratio (λ) of the burners (9) in operation is reduced, and that the part load limit of the turbine outlet temperature of the first turbine (TAT1) and/or the second turbine (TAT2) for a part load range is increased in order to shift the opening of the adjustable compressor guide vane row (14) towards a higher load, and that a part flow of compressed or partly compressed compressor air is expanded and the intake air (2) mixed therein.

2. Method according to claim 1, **characterised in that** on an increase in load, before connection of the second combustion chamber (15), first the turbine inlet temperature of the first turbine (TIT1) is increased to a part load limit and the adjustable compressor guide vane row (14) is opened, at the time of or during connection of the second combustion chamber (15) the adjustable compressor guide vane row (14) is closed and fuel is conducted into the second combustion chamber (15).

3. Method according to claim 1, **characterised in that** on load relief, before disconnection of the second combustion chamber (15), first the adjustable compressor guide vane row (14) is closed and this is opened again on disconnection of the second combustion chamber.

4. Method according to any of claims 1 to 3, **characterised in that** on load relief of the gas turbine, to generate a hysteresis, the second combustion chamber (15) is only disconnected at a load which lies below the load which is reached on operation with the first combustion chamber (4) at the part load limit of the turbine inlet temperature of the first turbine (TIT1) and with the adjustable compressor guide vane row (14) open.

5. Method according to claim 4, **characterised in that** the fuel supply (10) to the at least one burner (9) adjacent to a separating plane (38) is shut off first.

6. Method according to claim 4 or 5, **characterised in that** the number of shut down burners (9) is inversely proportional to the load.

7. Method according to any of claims 1 to 6, **characterised in that** at least one cooling air temperature and/or at least one cooling air mass flow (22, 23, 24) is controlled as a function of the load.

8. Method according to any of claims 1 to 7, **characterised in that** the fuel temperature of the first and/or second combustion chamber (4, 15) is controlled as a function of load.

## Revendications

1. Procédé pour le fonctionnement pauvre en émissions de CO d'une turbine à gaz avec une combustion séquentielle, la turbine à gaz étant constituée essentiellement d'au moins un compresseur (1) avec une série d'aubes de compresseur réglables (14), d'une première chambre de combustion (4), branchée en aval du compresseur, dont les gaz chauds alimentent une première turbine (7) et une deuxième chambre de combustion (15), branchée en aval de la première turbine (7) dont les gaz chauds alimentent une deuxième turbine (12), l'indice d'air (λ) des brûleurs opérationnels (9) de la deuxième chambre de combustion (15) étant maintenu inférieur à un indice d'air maximal (λₘₐₓ),
**caractérisé en ce que** l'alimentation en carburant (10) d'au moins un brûleur (9) de la deuxième chambre de combustion (15) est désactivée en cas de charge partielle de façon à ce que, lors d'une température d'entrée de turbine non modifiée de la deuxième turbine (TIT2), l'indice d'air (X) des brûleurs (9) en fonctionnement soit réduit et à ce que la limite de charge partielle de la température de sortie de turbine de la première turbine (TATI) et/ou de la deuxième turbine (TAT2) soit augmentée pour une zone de charge partielle afin de décaler l'ouverture de la série d'aubes de compresseur réglables (14) vers une charge plus élevée et à ce qu'un flux partiel d'air compresseur comprimé ou comprimé partiellement soit détendu et l'air aspiré (2) soit ajouté.

2. Procédé selon la revendication 1, **caractérisé en ce que**, lors d'une augmentation de charge, avant l'activation du deuxième brûleur (15), la température d'entrée de turbine de la première turbine (TIT1) est d'abord augmentée jusqu'à une limite de charge partielle et la série d'aubes de compresseur réglables (14) est ouverte pour l'activation ou, lors de l'activation de la deuxième chambre de combustion (15), la série d'aubes de compresseur réglables (14) est fermée et du carburant est introduit dans la deuxième chambre de combustion (15).

3. Procédé selon la revendication 1, **caractérisé en ce que**, lors d'une décharge, avant l'arrêt de la deuxième chambre de combustion (15), la série d'aubes de compresseur réglables (14) est débord fermée et celle-ci est à nouveau ouverte lors de l'arrêt de la deuxième chambre de combustion.

4. Procédé selon l'une des revendications 1 à 3, **caractérisé en ce que**, lors d'une décharge de la turbine à gaz, afin de générer une hystérésis, la deuxième chambre de combustion (15) n'est désactivée que lors d'une charge qui est inférieure à la charge atteinte lors d'un fonctionnement avec la première chambre de combustion (4) pour la limite de charge partielle de la température d'entrée de turbine de la première turbine (TIT1) et lorsque la série d'aubes de compresseur réglables (14) est ouverte.

5. Procédé selon la revendication 4, **caractérisé en ce que** l'alimentation en carburant (10) du brûleur (9) adjacent à un niveau de séparation (38) est désactivée en premier.

6. Procédé selon la revendication 4 ou 5, **caractérisé en ce que** le nombre de brûleurs désactivés (9) est inversement proportionnel à la charge.

7. Procédé selon l'une des revendications 1 à 6, **caractérisé en ce qu'**au moins une température d'air de refroidissement et/ou au moins un flux massique d'air de refroidissement (22, 23, 24) est régulé en fonction de la charge.

8. Procédé selon l'une des revendications 1 à 7, **caractérisé en ce que** la température du carburant de la première et/ou de la deuxième chambre de combustion (4, 15) est régulée en fonction de la charge.
